Europäisches Patentamt

European Patent Office

Office européen des brevets

(19)

(11) **EP 0 637 534 B1**

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int. Cl.$^6$: **B60T 8/26**, B60T 13/66

(21) Anmeldenummer: **94110673.4**

(22) Anmeldetag: **08.07.1994**

(54) **Verfahren zur Bestimmung einer verschleissabhängigen Bremskraftverteilung**

Method for calculation a wear dependent brake force distribution

Procédé pour calculer la répartition de la force de freinage en fonction de l'usure

(84) Benannte Vertragsstaaten:
**FR GB IT SE**

(30) Priorität: **05.08.1993 DE 4326256**

(43) Veröffentlichungstag der Anmeldung:
**08.02.1995 Patentblatt 1995/06**

(73) Patentinhaber: **MERCEDES-BENZ AG**
**D-70327 Stuttgart (DE)**

(72) Erfinder:
 • **Töpfer, Bernhard, Dr. Ing.**
  **D-70327 Stuttgart (DE)**
 • **Reiner, Michael**
  **D-70736 Fellbach (DE)**
 • **Klein, Bodo, Dipl.-Ing.**
  **D-30890 Borsinghausen (DE)**

(56) Entgegenhaltungen:
 EP-A- 0 386 952   EP-A- 0 546 488
 DE-A- 3 313 078   GB-A- 2 202 016
 GB-A- 2 266 567

## Beschreibung

Die Erfindung betrifft ein Verfahren zur Bestimmung einer verschleißabhängigen Bremskraftverteilung. Ein gattungsgemäßes Verfahren zum Ausgleich unterschiedlichen Bremsbelagverschleißes kann der DE 33 13 078 C2 entnommen werden.

Die Bremsbeläge der Radbremsen von Kfz verschleißen i.d.R. nicht gleichmäßig schnell an allen Achsen oder gar Rädern, wie dies zum Zwecke der Wartungs-/Reparaturkostenoptimierung erwünscht wäre. Einflußgrößen, die unausgeglichenen Verschleiß verursachen können, sind z.B. Streuungen der Kraftabgabe der Bremszylinder, der Radbremshysterese, des wirksamen Bremsdruckes, des Wirkungsgrades der Zuspannung, der Bremsenkennwerte und des spezifischen Verschleißkoeffizienten.

Zum Ausgleich unterschiedlichen Bremsbelag-Verschleißes zwischen den Rädern oder Achsen von druckmittelgebremsten Kfz sind bereits Verfahren vorgeschlagen worden, die - entweder auf der Basis direkt gemessener verschleiß- bzw. Restbelagdicken (DE-PS 33 13 078) oder auch indirekt über verschleißbestimmende Größen wie die Bremsentemperatur (DE-OS 35 02 051) - den Bremsdruck an den stärker verschlissenen oder thermisch höher beanspruchten Bremsen verringern. Dabei haben indirekte Verfahren, wie die Regelung der Bremsdrücke mit dem Ziel ausgeglichener Bremsentemperaturen, den Nachteil, daß damit wegen der unvermeidlichen Streuungen von Einflußparametern ein Verschleißgleichlauf nicht sichergestellt werden kann, auch wenn die Bremstrommeln stets alle etwa gleiche Temperatur erreichen.

Alle Verfahren der o.g. Art müssen sich aus Sicherheitsgründen auf den Bereich niedrigster Drücke (< 1 bar) beschränken, wenn nicht zugleich die Kraftschlußausnutzung zwischen Reifen und Straße überwacht wird und damit der Blockiergefahr der relativ stärker gebremsten Räder vorgebeugt ist. Aber auch bei Fahrzeugen mit ABS ist es - obwohl hier Blockieren vermieden wird - aus Komfortgründen stets unerwünscht, daß infolge einer ungeeigneten Bremskraftverteilung der an sich nur für Grenzfälle gedachte Blockierschutz schon bei Routinebremsungen häufig einsetzt. Bei den gering belasteten Hinterachsen leerer LKW wäre dies aber schon auf regennasser Fahrbahn der Fall, wenn Drücke für die verschleißmaßgeblichen häufigen Abbremsungshöhen von 0,1 ... 0,25g eingesteuert werden, wobei g einen Wert für die Erdbeschleunigung repräsentiert. Andererseits wäre eine Verschleißregelung allein im Bereich der Drücke unterhalb von 1 bar nicht funktionssicher, da sie nur einen Bruchteil der häufigen Bremsungen erfassen könnte.

Die bekannten Lösungen lassen dazu noch offen, ob womöglich mit starken Regeleingriffen kurzfristig das Regelziel "Verschleißgleichgewicht" erreicht werden soll; abgesehen von den o.g. möglichen Adhäsionsproblemen würde das zu abwechselnder Überbeanspruchung der jeweils geringen verschlissenen Bremsen und damit zu zwar ausgeglichenem, aber vorzeitigem Gesamtverschleiß führen. Es wird auch nicht offenbart, auf welche Weise die Größe der notwendigen Bremsdruckänderung selbst ermittelt und evtl. begrenzt werden soll.

Die vorliegende Erfindung verhindert Adhäsionsprobleme, ohne sich dabei auf "niedrigste" Bremsdrücke beschränken zu müssen. Nur bei den im Betrieb sehr seltenen Bremsungen oberhalb z.B. 0,3*g oder einer "erlernten" Adhäsionsschwelle, die praktisch auf wirklich kritische Bremssituationen beschränkt sind, wird auf die Verschleißregelung verzichtet. Im übrigen werden erfindungsgemäß die Regeleingriffe mit dem Ziel einer nur langfristigen Herbeiführung ausgeglichenen Verschleißes ausgeführt; statt nur eines Verschleißausgleiches wird ein Verschleißgleichlauf angestrebt.

Beschreibung des erfindungsgemäßen Verfahrens

Bei elektronisch geregelten Bremssystemen (wie z.B. den sog. elektro-pneumatischen oder elektro-hydraulischen Bremsanlagen) besteht die Möglichkeit, gezielt rechnerisch bestimmte Drücke vorzugeben und damit beliebige Bremskraftverteilungen einzustellen. Die Rechen- und Speicherfähigkeit einer solchen Fahrzeugelektronik wird hier verwendet. Eine besonders vorteilhafte Ausführungsform ergibt sich durch die Kombination mit dem adhäsionsoptimierenden Verfahren nach DE 40 07 360 A1. Die Erfindung ist aber generell für alle anderen Verfahren zur Bestimmung der Basis-Bremskraftverteilung geeignet, sofern - wie Stand der Technik - die Raddrehgeschwindigkeiten für die Verarbeitung in Blockierschutzeinrichtungen erfaßt werden.

Das Verfahren basiert auf einer Überwachung des Kraftschlusses unterhalb der Blockiergrenze durch einen einfachen Drehzahlvergleich. Eine Ermittlung der absoluten Höhe der Adhäsionsbeiwerte oder der Radschlupfe ist hierzu nicht erforderlich, es genügen die - z.B. über bekannte ABS-Sensoren gewonnenen -Raddrehgeschwindigkeiten. Insoweit wird auf das Verfahren gemäß DE 38 29 951 A1 verwiesen. Als Maß für die Zulässigkeit einer bestimmten Abweichung von der bzgl. der Adhäsion Reifen/Straße optimalen Bremsdruckverteilung zum Zwecke des Verschleißausgleiches gilt ein Grenzwert der auf die Fahrzeuggeschwindigkeit bezogenen Raddrehgeschwindigkeiten von z.B. 1 bis 5%. Die einzusteuernden, einer ggf. adhäsionsoptimierten Basis-Bremskraftverteilung überlagerten Druckdifferenzen werden aus Komfortgründen auf ein relativ kleines Maß begrenzt. Ihre Größe wird während einer Fahrt - mit Ausnahme adhäsionskritischer Zustände - nicht verändert. In einer bevorzugten Anwendungsart werden Änderungen der Verschleiß-Sensorsignale während einer Fahrt nicht berücksichtigt; vielmehr wird ein zu Beginn jeder Fahrt ermittelter Verschleißzustand "eingefroren" und allenfalls nach einer begrenzten Anzahl von Bremsungen im Sinne einer Ausschaltung von Meßfehlern überprüft. Da selbst bei sehr fein auflösenden Sensoren ein Verschleißungleichgewicht erst nach Hunderten bis Tausenden von Bremsungen erkennbar ist, ist dieses "Einfrieren" ohne Risiko möglich und zur Vermeidung ständig schwankender Regeleingriffe auch erforderlich. Ohnehin wird erfindungsgemäß die Größe der eingeregelten Druckdifferenz so klein gewählt, daß nur ganz allmählich über viele Bremsungen hinweg das Verschleißungleichgewicht abgebaut wird. Das verfahren ist also keine Regelung im üblichen Sinne - ein verschleißregelnder Eingriff in Einzelbremsungen wird nicht vorgesehen. Wegen der großen "Trägheit" des Systems können Langzeitspeicher sinnvoll sein, wenn die Elektronik einen lernfähigen Charakter erhalten soll oder Meßwertstreuungen der Verschleißsensierung über mehrere Fahrten hinweg ausgeglichen werden sollen.

Unter der Voraussetzung, daß die Verschleißsensorik gegenüber Umwelteinflüssen genügend unempfindlich ist - dies gilt insbesondere für die Abhängigkeit des Meßwertes von der Temperatur - können die Verschleißwerte auch permanent erfaßt und gemäß dem nachfolgend beschriebenen Verfahrensablauf ausgeregelt werden. Es ist offensichtlich, daß analog zur achsweisen Verschleißoptimierung der verschleißausgleich auch radweise erfolgen kann. Hierfür wird - unabhängig vom gerade vorliegenden Fahrzustand - als adhäsionsoptimal die Druckgleichheit zwischen den Radbremsen jeweils an einer Achse gesetzt, und von dieser Basis aus werden bei Vorliegen entsprechender Verschleißsignale kleine Druckdifferenzen eingesteuert. Da die zum Verschleißausgleich notwendigen Bremsdruckänderungen zum Schiefziehen führen können, sind die möglichen Druckunterschiede an der Vorderachse zu begrenzen.

Weiterhin können mit dem erfindungsgemäßen Verfahren auch gezielt bestimmte Verschleißrelationen eingeregelt werden, was z.B. bei Fahrzeugen mit stark von der Achslastverteilung abweichender Belagvolumenverteilung erwünscht sein kann. Beispielsweise kann in einem Fahrzeug mit Scheibenbremsen an einer und Trommelbremsen an der anderen Achse ein Verschleißverhältnis von 2:1 statt 1:1 eingeregelt werden, damit die Trommelbremsen nur und genau dann neu belegt werden müssen, wenn die Scheibenbremse 2 Belagsätze verschlissen hat.

Das erfindungsgemäße Verfahren ist in der Zeichnung veranschaulicht und in der nachfolgenden Beschreibung erläutert. Es zeigt:

Fig. 1    die fahrwerkseitigen Bestandteile eines beispielhaften, zur Durchführung des Verfahrens geeigneten Druckluft-Bremssystems,

Fig. 2    ein Flußdiagramm des zum achsweisen Verschleißausgleiches angewandten Verfahrens.

Zum besseren Verständnis des Verfahrens ist seiner Erläuterung die Beschreibung einer zur Durchführung des Verfahrens geeigneten Bremsanlage vorangestellt.

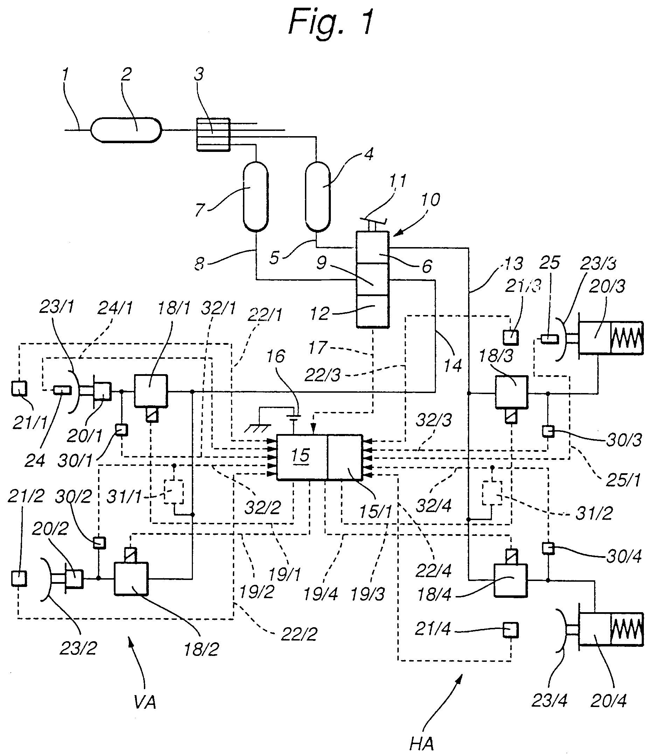

Gemäß Fig. 1 umfaßt eine solche Bremsanlage Bestandteile, wie sie von hochwertigen elektronischen ABS-Systemen mit Zentralsteuerung und radnahen ABS-Ventilen an sich bereits bekannt sind. Systeme dieser Art verfügen mittels Raddrehbewegungssensoren über die Möglichkeit, mit in Abhängigkeit von Raddrehzahlen gesteuerten Radbremsdrücken das Blockieren einzelner Räder bei Erreichen der von der Reibpaarung Reifen/Straße bestimmten Kraftschlußgrenze dadurch zu verhindern, daß der Bremsdruck am entsprechenden Rad so lange reduziert oder zumindest nicht weiter gesteigert wird, als die Blockiertendenz besteht.

Durch eine von einem nicht gezeigten Luftkompressor kommende Speiseleitung 1 wird ein Vorratsbehälter 2 mit Druckmittel versorgt. Über ein Mehrwege-Sicherheitsventil 3 gelangt dieses in Untervorratsbehälter 4 und 7 einer Mehrzahl von Bremskreisen; diese Behälter sind hier beispielhaft einem Vorderachs- und Hinterachsbremskreis des Fahrzeugs zugeordnet. Über Versorgungsleitungen 5 und 8 strömt Druckmittel zu zwei Einzelsektionen 6 und 9 des Betriebsbremsventils 10, welches durch das Pedal 11 betätigt wird. Diesem Ventil oder Pedal zugeordnet ist ein elektrischer Druckaufnehmer bzw. ein Positions- oder Stellungsgeber 12; letzterer ist stellungsschlüssig mit dem Pedal 11 bzw. dem von ihm betätigten Ventilantrieb verbunden und dient zur Erkennung des Fahrerwunsches $Z_{soll}$, welches über die Signalleitung 17 einem elektronischen Zentralsteuergerät 15 zugeführt wird. Über ausgangsseitige Betriebsdruckleitungen 13 und 14 versorgen die Sektionen 6 und 9 des Betriebsbremsventils 10 achsnah installierte, elektrisch ansteuerbare Ventil 18/1 und 18/2 bzw. 18/3 und 18/4 zweier verschiedener Achsen mit Druckmittel.

Die Ventile 18/1 bis 18/4 können analog zu ABS-Ventilen ausgebildet sein, wie sie bereits in herkömmlichen Druckluft-Betriebsbremsanlagen mit überlagertem elektronischem ABS Einsatz finden. Vorzugsweise kann es sich dabei aber um eine robustere Ausführung mit hoher Standzeit handeln, da diese Ventile in einem gegenüber dem relativ schmalen Blockiergrenzbereich erweiterten Aussteuerbereich wirken sollen und insoweit einer höheren Steuerauslastung unterworfen sind als reine ABS-genutzte Ventile. Insbesondere sind auch elektrisch ansteuerbare Druckmodulatoren an dieser Stelle denkbar.

Den Ventilen 18/1 und 18/2 bzw. 18/3 und 18/4 sind Bremszylinder 20/1 und 20/2 bzw. 20/3 und 20/4 beispielsweise einer Vorder- bzw. Hinterachse des Fahrzeugs zugeordnet. Von dem elektronischen Zentralsteuergerät 15 werden die Ventile über entsprechende Steuerleitungen 19/1 bin 19/4 elektrisch angesteuert. Raddrehzahlsensoren 21/1 bis 21/4 nehmen die Drehzahlen der Räder kontinuierlich auf und geben über entsprechende Leitungen 22/1 bis 22/4 radspezifische Drehzahlsignale an das elektronische Zentralsteuergerät 15 ab, welches aus einem elektrischen Energiespeicher 16 gespeist wird.

Je nach Ausgestaltung der Ventile 18/1 und 18/2 bzw. 18/3 und 18/4 können noch bremszylinderseitige Drucksensoren 30/1 bis 30/4 oder achszugeordnete Drucksensoren 31/1 und 31/2 vorgesehen sein, welche über Empfangsleitungen 32/1 bis 32/4 bzw. 32/2 und 32/4 Drucksignale an das Steuergerät 15 übermitteln.

Ferner ist zumindest jeweils einem Bremsbelag eines Rades einer Achse ein Veschleißsensor zugeordnet, so beispielsweise dem Bremsbelag 23/1 des rechten Rades der Vorderachse VA der Verschleißsensor 24 und dem Bremsbelag 23/3 des rechten Rades der Hinterachse HA der Verschleißsensor 25. Die Verschleißsensoren 24, 25 können die jeweilige Restbelagdicke auf grundsätzlich beliebige bekannte Weise feststellen. Die Ausgänge der Verschleißsensoren 24, 25 arbeiten über Signalleitungen 24/1 und 25/1 ebenfalls auf das elektronische Zentralsteuergerät 15.

Die jeweiligen Rad-Bremszylinder 20/1 bis 20/4 stellen Stellglieder dar, die die schematisch angedeuteten Bremsbeläge 23/1 bis 23/4 so verschieben, daß sich durch Reibungseingriff mit der jeweiligen Radbremstrommel bzw. -scheibe Verzögerungswirkungen auf die Räder ergeben.

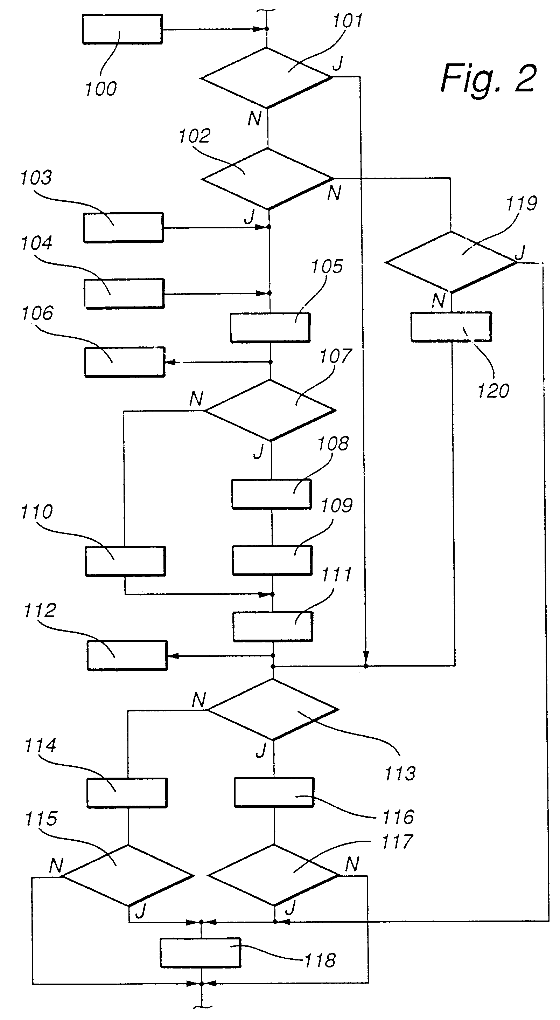

Als Ausführungsbeispiel ist im Flußdiagramm nach Fig. 2 ein Verfahren dargestellt, welches mit einer Langzeitspeicherung der verschleißoptimalen Bremsdruckverteilung $\Phi_V$ - womit die Bremsdruckrelation Vorderachsbremsdruck zu Hinterachsbremsdruck = pVA/pHA bezeichnet wird - sowie des Verschleißzustandes arbeitet.

Dabei ist $\Phi_{ALT}$ der für eine repräsentative Abbremsungshöhe, z.B. 0,25 x g, gültige Wert nach der letzten vorangegangenen Fahrt bzw. ein für die Fahrzeugpalette repräsentativer Start-Mittelwert entsprechend der achsweisen oder radweisen Verteilung des verschleißbaren Belagvolumens. $\Phi_0$ bzw. $\Phi_{ALT}$ ist in einem Langzeitspeicher eines Bremsrechners 15/1 des Zentralsteuergerätes 15 abgelegt, wobei während der Laufzeit des Fahrzeuges $\Phi_0$ durch $\Phi_{ALT}$ überschrieben und $\Phi_{ALT}$ laufend aktualisiert wird. Das Ablesen der Angaben aus dem Langzeitspeicher erfolgt in den Verfahrensschritten 100 und 104, das aktualisieren der Werte in den Verfahrensschritten 106 und 112.

Nach dem Ablesen des Wertes $\Phi_{ALT}$ wird in dem Schritt 101 abgefragt ob der Parameter AV der verschleißoptimalen Bremskraftverteilung für die aktuelle Fahrt bereits bestimmt wurde. Ist der Parameter AV bereits bestimmt, so erfolgt ein Sprung zum Schritt 113, wodurch sowohl die Parameterbestimmung der adhäsionsoptimalen Bremskraftverteilung zwischen den Achsen als auch die Parameterbestimmung einer verschleißoptimalen Bremskraftverteilung $\Phi_V$ umgangen wird. Im Schritt 113 wird die aus der Bremspedalstellung abgeleitet Sollverzögerung $z_{soll}$ mit dem Grenzwert $G_z$ verglichen. Der Grenzwert wurde mit $G_z$= 0,3g festgesetzt. Dieser Grenzwert wird nur bei Voll- oder Notbremsungen, die nicht verschleißrelevant sind, überschritten.

Wird der Grenzwert $G_z$ überschritten, so erfolgt die Bremskraftverteilung im Schritt 116 allein nach der adhäsionsoptimierten Bremskraftverteilung $\Phi_{adh}$. Dem kann sich mit dem Schritt 117 ein Test anschließen, ob die relative Drehzahldifferenz dS zwischen den Fahrzeugrädern einen Grenzwert $dS_0$ überschreitet. Ist dies der Fall, so kann eine dynamische Korrektur des Bremseingriffes in dem Schritt 118 erfolgen. Ein entsprechendes Verfahren ist in der DE 40 07 360 A1 beschrieben. Nach der gegebenenfalls durchgeführten dynamischen Korrektur oder nach dem Schritt 117 ist ein Zyklus des Steuerungsverfahrens abgeschlossen. Es können sich andere Steuerungsverfahren des Bremseingriffes anschließen oder der nächste Zyklus des Steuerungsverfahrens wird gestartet.

Wird im Schritt 113 der Grenzwert $G_z$ nicht überschritten, so wird die Bremsung gemäß der verschleißabhängigen Bremskraftverteilung $\Phi_V$, wie sie in 114 nach der Gleichung

$$\Phi_V = AV + B * z_{soll}$$

berechnet wird durchgeführt. Dabei ist AV im Schritt 111 ermittelt worden oder gleich $AV_{alt}$ und B eine Größe, die bei der Bestimmung der adhäsionsoptimierten Bremskraftverteilung nach dem Verfahren aus der DE 40 07 360 A1 ermittelt wird. In 115 erfolgt dann eine Überprüfung, ob die relative Drehzahldifferenz dS der Räder einen weiteren vorgegebenen Schwellwert $D_{sV}$ überschreitet. Dieser Schwellwert kann beispielsweise als ein bestimmter Wert aus einem Bereich zwischen 1% und 5% sein. Bei Grenzwertüberschreitung erfolgt eine dynamische Bremskraftkorrektur gemäß 118, wie er vorher schon beschrieben wurde. Ansonsten ist der Verfahrenszyklus abgeschlossen.

Wurde im Schritt 101 festgestellt, daß der Parameter AV noch nicht bestimmt wurde, so wird im Schritt 102 abgefragt, ob die adhäsionsoptiemierte Bremskraftverteilung $\Phi_{adh}$ bestimmt wurde oder nicht.

Wurde dieser Wert noch nicht bestimmt so erfolgt ein Sprung zu dem Schritt 119. Dort wird überprüft ob die Drehzahldifferenz dS zwischen den Fahrzeugrädern einen Grenzwert $ds_0$ überschreitet oder nicht. Wird der Grenzwert $ds_0$ überschritten, so erfolgt ein Sprung zu dem Schritt 118, in dem eine dynamische Korrektur des Bremseingriffes durchgeführt wird.

Wird der Grenzwert $ds_0$ nicht überschritten, so erfolgt in Schritt 120 die Bestimmung einer adhäsionsoptimierten Bremskraftverteilung $\Phi_{adh}$, beispielsweise nach dem in der DE 40 07 360 A1 beschriebenen Verfahren. Anschließend erfolgt dann ein Sprung zum Schritt 113.

Wurde im Schritt 102 festgestellt, daß die adhäsionsoptimierte Bremskraftverteilung $\Phi_{adh}$ für die aktuelle Fahrt schon bestimmt ist, so kann die dieser Bremskraftverteilung zu überlagernde verschleißabhängige Bremskraftverteilung bestimmt werden.

Die Bremsbelagstärken $t_i$ der n sensierten Radbremsen werden jeweils beim Fahrzeugstart gemessen, weil man hier von normalerweise kalten, zumindest jedoch von nicht sehr heißen Radbremsen und Bremsbelagsverschleißsensoren ausgehen kann. Meßfehler durch Temperatureinflüsse werden abgeschwächt. Weil sich Umwelteinflüsse wie zum Beispiel Feuchtigkeit gerade beim Fahrzeugstart negativ auf das Meßergebnis auswirken könnten, ist je nach Sensorprinzip eventuell eine Kontrollmessung nach zwei bis drei Bremsungen vorteilhaft. Die ursprünglich gemessenen Werte können beispielsweise durch gewichtete Mittelwertbildung mit den Werten der Kontrollmessung korrigiert werden. Die n Werte der Bremsbelagstärken $t_i$ werden in einem Speicher abgelegt. In dem Schritt 103 werden diese Werte aus dem Speicher abgerufen. In dem Speicher sind ebenfalls Mittelwerte $t'_{i,alt}$ der ermittelten Bremsbelagstärken aus einer bestimmten Anzahl, beispielsweise 10 bis 20, vorhergehender Bremsbelagstärkenmessungen und Verschleißdifferenzen $d_{V,alt}$ abgespeichert, die im Schritt 104 abgerufen werden. Im Schritt 105 werden aufgrund der Werte aus den Schritten 103 und 104 die Verschleißdifferenz $d_V$ und die neuen Mittelwerte $t'_i$ ermittelt und sodann im Schritt 106 abgespeichert. Statt der Speicherung der Mittelwerte $t'_{i,alt}$ können auch die jeweiligen Meßwerte abgespeichert werden und aus den abgespeicherten Werten und den neuen Werten Mittelwerte gebildet werden. Bei der Mittelwertbildung wird davon ausgegangen, daß über den abgespeicherten Zeitraum noch kein nennenswerter Verschleiß aufgetreten ist und deshalb bei der Mittelwertbildung hauptsächlich Streuungen der einzelnen Messungen ausgeglichen werden, so daß die tatsächlichen Bremsbelagstärken hinreichend genau erfaßt sind. Als Verschleißdifferenz $d_V$ kann beispielsweise bei einer achsweisen Bremsbelagverschleiß-Regelung die Differenz aus den Bremsbelagstärken $t_i$ an der Vorderachse und den Bremsbelagstärken $t_i$ an der Hinterachse herangezogen werden.

Im Schritt 107 wird sodann ermittelt, ob gegenüber dem bei einer vorangegangenen Fahrt abgespeicherten Verschleißzustand, gekennzeichnet beispielsweise durch die Verschleißdifferenz $d_{V,alt}$ eine Änderung $dd_V$ bestimmter Mindestgröße eingetreten ist. Die Mindestgröße ist so anzusetzen, daß sie nicht mehr nennenswert von Meßungenauigkeiten beeinflußt wird, trotzdem jedoch möglichst gering ist. Wird die Verschleißdifferenz $d_V$ als Vergleichsgröße herangezogen, so kann der Grenzwert für die Änderung $dd_V$ beispielsweise bei $G_V=1$ mm festgesetzt werden. Wird der Grenzwert überschritten, so wird in den Schritten 108 und 109 eine neue verschleißabhängige Bremsdruckverteilung $\Phi_V$ bestimmt. Dabei soll die neu berechnete verschleißabhängige Bremsdruckverteilung $\Phi_V$ nur wenig von der vorherigen verschleißabhängigen Bremsdruckverteilung $\Phi_{V,alt}$ abweichen. Im Schritt 108 wird in Abhängigkeit der Verschleißdifferenz $d_V$ ein Korrekturwert der Bremsdruckdifferenz $d_P$ bestimmt. So wird für die kleinste noch sicher identifizierbare Verschleißdifferenz $d_V$ bei einer Vergleichsabbremsung von beispielsweise 0,25g eine Änderung der bisherigen Druckdifferenz $d_P$ von beispielsweise 0,2 bar vorgesehen. Weitere Werte für die gewünschte Druckdifferenz $d_P$ können beispielsweise aus einem Kennfeld in Funktion des Parameters Verschleißdifferenz $d_V$ abgelesen werden.

Im Schritt 109 wird auf Basis der Adhäsionsoptimierung nach DE 40 07 360 A1 der Wert des Parameters AV in der Bremskraftverteilungsfunktion $\Phi_V = AV + B^*z_{soll}$ um einen entsprechenden Korrekturbetrag $d_{AV}$ aufgrund der ermittelten gewünschten Druckdifferenz $d_P$ anhand der Gleichung

$$d_{AV} = \frac{P_{AV} - 0{,}5^*d_P}{P_{HA} + 0{,}5^*d_P} - \Phi_{alt}$$

ermittelt. Hierin sind die Bremsdrücke an der Vorderachse $P_{VA}$ und an der Hinterachse $P_{HA}$ für die Vergleichsabbremsung von 0,25g auf der Basis der Bremskraftverteilung $\Phi_{alt}$ berechnet. Danach schließt sich der Schritt 111 an.

Wurde dagegen im Schritt 107 ein überschreiten des Grenzwertes nicht festgestellt, so erfolgt ein Sprung zu dem Schritt 110, in dem der Wert der Änderung $d_{AV}$ der Achslastverteilung zu Null gesetzt wird, das heißt, die verschleißabhängige Bremskraftverteilung $\Phi_V$ bleibt unverändert. Es schließt sich der Schritt 111 an.

Im Schritt 111 wird mit dem für die laufende Fahrt optimierten B ein Rechenwert $AV_{alt}$ aus der Gleichung

$$AV_{alt} = \Phi_{alt} - 0{,}25^*g^*B$$

berechnet. Der erhaltene Wert wird mit dem berechneten $d_{AV}$ korrigiert, so daß

$$AV = AV_{alt} + d_{AV}$$

gilt. Daraus wird im Schritt 112 die verschleißabhängige Bremsdruckverteilung $\Phi_V$ nach der Gleichung

$$\Phi_V = AV + 0{,}25^*g^*B$$

bestimmt und in dem Langzeitspeicher der Recheneinheit 15 abgelegt. Daran schließt sich der Verfahrensschritt 113 an.

Stellt sich im weiteren Betrieb des Fahrzeuges heraus, daß eine vorangegangene Änderung der Druckdifferenz zu klein war, das heißt, daß die Verschleißdifferenz weiter zunimmt, so wird bei Erkennen der nächsten Stufe der Verschleißdifferenz die Druckdifferenz um weitere beispielsweise 0,2 bar vergrößert. Wegen der Adhäsionsüberwachung ist es gefahrlos möglich, bei weiter steigender Verschleißdifferenz $d_V$ die Druckabweichung $d_P$ proportional weiter zu erhöhen. Zusätzlich dazu ist es möglich, bei Fahrzeugen, die über ein Diagnosesystem verfügen, ab der dritten Druckdifferenzänderung gegenüber der adhäsionsoptimierten Bremsdruckverteilung $\Phi_{adh}$ einen Hinweis darauf zu speichern, daß möglicherweise eine oder mehrere Radbremsen nicht richtig arbeiten.

Aufgrund der Langzeit-Speichermöglichkeit kann der Verschleißverlauf über einen längeren Zeitraum registriert werden. Dann ist es in einer weiteren Ausgestaltung des Verfahrens möglich, aus dem Ergebnis zurückliegender Änderungen von $\Phi_V$ eine Extrapolation dergestalt abzuleiten, daß, im Mittel gleichbleibende Verschleißbedingungen vorausgesetzt, die ja jeweils aktuell bekannten, verbliebenen Restbelagdicken gleichzeitig völlig verschlissen werden.

Alternativ dazu ist auch eine Regelung ohne Langzeitspeicher darstellbar. Dazu wird bei jedem Fahrzeugstart der aktuelle Verschleißzustand $t_i$ gemessen, und die Verschleißdifferenzen $d_{V,i}$ zwischen den einzelnen Radbremsen gebildet. Die Verschleißdifferenzen $d_{V,i}$ werden mit einer fest abgespeicherten Konstante auf eine Korrektur der Basis-Bremsdruckverteilung $\Phi_{V0}$ umgerechnet. Hierbei ist $\Phi_{V0}$ ein für die Fahrzeugpalette typischer Mittelwert, welcher der Verteilung des verschleißbaren Bremsbelagvolumens entspricht. Die Konstante ist fest im Programm gespeichert und wird auf der Basis von Erfahrungswerten so gewählt, daß bei normalen Verschleißabweichungen keine unnötig großen Bremsdruckveränderungen erfolgen. Die übrigen Regelschritte, insbesondere die Überwachung der Drehzahldifferenzen, bleiben, wie oben als Beispiel beschrieben, erhalten.

**Patentansprüche**

1. Verfahren zur Bestimmung einer verschleißabhängigen Bremskraftverteilung ($\Phi_V$) zwischen gebremsten Rädern eines Fahrzeuges, wobei mittels Sensoren (24,25) Verschleißwerte ($t_i$) von Bremsbelägen (23/1,23/2,23/3,23/4) ermittelt werden und diese Verschleißwerte ($t_i$) repräsentierende Signale einer Recheneinrichtung (15,15/1) zugeführt werden, wobei in der Recheneinrichtung (15,15/1) die verschleißabhängige Bremskraftverteilung ($\Phi_V$) so bestimmt wird, daß den gegenüber den anderen, einen zu großen Verschleiß aufweisenden Bremsen ein eine geringere Bremskraft repräsentierendes Stellsignal zugeführt wird und wobei in einem Speicher die einzelnen Verschleißwerte ($t_{i,alt}$) vorangegangener Messungen abgelegt sind,
**dadurch gekennzeichnet,**
daß die Ermittlung der Verschleißwerte ($t_i$) und der verschleißabhängigen Bremskraftverteilung ($\Phi_V$) jeweils zu Beginn einer Fahrt erfolgt und die ermittelte verschleißabhängige Bremskraftverteilung ($\Phi_V$) während der gesamten Fahrt beibehalten wird.

2. Verfahren nach Anspruch 1,
**dadurch gekennzeichnet,**
daß zusätzlich die ermittelte verschleißabhängige Bremskraftverteilung ($\Phi_V$) in dem Speicher abgelegt wird.

3. Verfahren nach Anspruch 2,
**dadurch gekennzeichnet,**
daß aus den ermittelten Verschleißwerten ($t_i$) und aus den in dem Speicher abgelegten Verschleißwerten ($t_{i,alt}$, $d_{V,alt}$) zumindest eine die Veränderung des Verschleißes repräsentierende Größe (ddV) berechnet wird und daß eine Veränderung der verschleißabhängigen Bremskraftverteilung ($\Phi_V$)

gegenüber der im Speicher abgelegten Bremskraftverteilung ($\Phi_{V,alt}$) nur dann stattfindet, wenn die die Veränderung des Verschleißes repräsentierende Größe ($dd_V$) einen Grenzwert ($G_V$) übersteigt.

4. Verfahren nach Anspruch 3
**dadurch gekennzeichnet,**
daß bei einer Veränderung der verschleißabhängigen Bremskraftverteilung ($\Phi_V$) gegenüber der im Speicher abgelegten Bremskraftverteilung ($\Phi_{V,alt}$) ein Korrekturwert ($d_p$) in Abhängigkeit der die Veränderung des Verschleißes repräsentierenden Größe ($d_V$) bestimmt wird.

5. Verfahren nach Anspruch 3,
**dadurch gekennzeichnet,**
daß bei zumindest zweimaligen gleichsinnigen Veränderung der verschleißabhängigen Bremskraftverteilung ($\Phi_V$) innerhalb einer begrenzten Zeit- oder Fahrleistungsgrenze ein eine vorzeitige Bremsenabnutzung oder Bremsenfehlfunktion repräsentierendes Signal erzeugt wird.

6. Verfahren nach Anspruch 1,
**dadurch gekennzeichnet,**
daß der Speicher als vom Betrieb des Fahrzeugs unabhängiger Langzeitspeicher ausgebildet ist.

7. Verfahren nach Anspruch 1,
**dadurch gekennzeichnet,**
daß die verschleißabhängige Bremskraftverteilung ($\Phi_V$) für die Bremsen der Räder einer Achse (VA,HA) gemeinsam erfolgt.

8. Verfahren nach Anspruch 7,
**dadurch gekennzeichnet,**
daß die verschleißabhängige Bremskraftverteilung ($\Phi_V$) zwischen den Achsen (VA,HA) so erfolgt, daß das Verhältnis der Verschleißwerte ($t_i$) an den jeweiligen Achsen durch Erweitern und/oder Kürzen in ein Verhältnis natürlicher Zahlen, von denen wenigstens eine "eins" lautet, umformbar ist.

9. Verfahren nach Anspruch 1,
**dadurch gekennzeichnet,**
daß die ermittelten Verschleißwerte ($t_i$, $t_{i,alt}$) der einzelnen Räder in einem Schieberegister abgelegt sind und aus den Verschleißwerten ein mittlerer Verschleiß ($t_{i,m}$) berechnet wird.

10. Verfahren nach Anspruch 1,
**dadurch gekennzeichnet,**
daß die verschleißabhängige Bremskraftverteilung ($\Phi_V$) einer adhäsionsoptimierten Bremskraftverteilung ($\Phi_{adh}$) überlagert ist.

11. Verfahren nach Anspruch 10,
**dadurch gekennzeichnet,**
daß die verschleißabhängige Bremskraftverteilung

($\Phi_V$) dann unterdrückt wird, wenn der aus einer willkürlich betätigbaren Bremskraftgeber ableitbare Soll-Verzögerungswert ($z_{soll}$) einen Grenzwert ($G_Z$) überschreitet.

12. Verfahren nach Anspruch 11,
**dadurch gekennzeichnet,**
daß der Grenzwert ($G_Z$) für den Soll-Verzögerungs-wert einer Voll- oder Notbremsung entspricht.

13. Verfahren nach Anspruch 12,
**dadurch gekennzeichnet,**
daß der Grenzwert das 0,3-fache der Erdbeschleunigung (g) beträgt.

14. Verfahren nach Anspruch 10,
**dadurch gekennzeichnet,**
daß für die verschleißabhängige Bremsdruckverteilung ein Grenzwert ($d_{sV}$) für die relative Raddrehzahldifferenz der Räder vorgegeben ist, wobei der Grenzwert ($d_{sV}$) 1% bis 5% der mittleren Raddrehzahl beträgt und wobei bei überschreiten des Grenzwertes ($d_{sV}$) eine dynamische Korrektur der Bremskraftverteilung erfolgt.

15. Verfahren nach Anspruch 1 oder 10,
**dadurch gekennzeichnet,**
daß der verschleißabhängigen Bremskraftvertei-lung ($\Phi_V$) ein ABS überlagert ist.

**Claims**

1. Method of determining a wear-dependent braking force distribution ($\Phi_V$) between braked wheels of a vehicle, wear values ($t_i$) of brake linings (23/1, 23/2, 23/3, 23/4) being determined by means of sensors (24, 25) and signals representing these wear values ($t_i$) being supplied to a computer device (15, 15/1), the wear-dependent braking force distribution ($\Phi_V$) being determined in the computer device (15, 15/1) in such a way that a setting signal representing a lower braking force is supplied to the brakes exhibiting a wear which is too large relative to the others and the individual wear values ($t_{i,old}$) of preceding measurements being deposited in a memory, characterized in that the determination of the wear val-ues ($t_i$) and the wear-dependent braking force distribution ($\Phi_V$) takes place at the beginning of each journey and the wear-dependent braking force dis-tribution ($\Phi_V$) determined is retained during the whole of the journey.

2. Method according to Claim 1, characterized in that the wear-dependent braking force distribution ($\Phi_V$) determined is additionally deposited in the memory.

3. Method according to Claim 2, characterized in that at least one quantity (ddV) representing the change in the wear is calculated from the wear values ($t_i$) determined and from the wear values ($t_{i,old}, d_{V,old}$) deposited in the memory and in that a change in the wear-dependent braking force distribution ($\Phi_V$) rel-ative to the braking force distribution ($\Phi_{V,old}$) depos-ited in the memory only takes place when the quantity ($dd_V$) representing the change in the wear exceeds a limiting value ($G_V$).

4. Method according to Claim 3, characterized in that in the case of a change in the wear-dependent brak-ing force distribution ($\Phi_V$) relative to the braking force distribution ($\Phi_{V,old}$) deposited in the memory, a correction value ($d_P$) is determined as a function of the quantity ($d_V$) representing the change in the wear.

5. Method according to Claim 3, characterized in that in the case of at least two changes in the wear-dependent braking force distribution ($\Phi_V$) in the same direction within a limited time or within a driving performance limit, a signal representing premature brake wear or a faulty brake function is generated.

6. Method according to Claim 1, characterized in that the memory is configured as a long-term memory independent of the operation of the vehicle.

7. Method according to Claim 1, characterized in that the wear-dependent braking force distribution ($\Phi_V$) takes place jointly for the brakes of the wheels of one axle (VA,HA).

8. Method according to Claim 7, characterized in that the wear-dependent braking force distribution ($\Phi_V$) takes place between the axles (VA,HA) in such a way that the ratio of the wear values ($t_i$) at the respec-tive axles can be converted by increasing and/or reducing to a ratio of natural numbers, of which at least one is "one".

9. Method according to Claim 1, characterized in that the wear values ($t_i, t_{i,old}$) determined for the individual wheels are deposited in a shift register and an average wear ($t_{i,m}$) is calculated from the wear values.

10. Method according to Claim 1, characterized in that the wear-dependent braking force distribution ($\Phi_V$) is superimposed on an optimum-adhesion braking force distribution ($\Phi_{adh}$).

11. Method according to Claim 10, characterized in that the wear-dependent braking force distribution ($\Phi_V$) is suppressed when the required deceleration value ($Z_{required}$), which can be derived from an arbitrarily actuable braking force pick-up, exceeds a limiting value ($G_Z$).

12. Method according to Claim 11, characterized in that the limiting value ($G_Z$) for the required deceleration value corresponds to a full or emergency braking action.

13. Method according to Claim 12, characterized in that the limiting value is 0.3 times the gravitational acceleration (g).

14. Method according to Claim 10, characterized in that a limiting value ($d_{sV}$) is specified for the wear-dependent braking force distribution in the case of the relative wheel rotational speed difference between the wheels, the limiting value ($d_{sV}$) being between 1 and 5% of the average wheel rotational speed and a dynamic correction of the braking force distribution taking place when the limiting value ($d_{sV}$) is exceeded.

15. Method according to Claim 1 or 10, characterized in that an anti-lock braking system is superimposed on the wear-dependent braking force distribution ($\Phi_V$).

**Revendications**

1. Procédé pour déterminer une répartition ($\Phi_V$) de la force de freinage en fonction de l'usure entre les roues freinées d'un véhicule, selon lequel des valeurs d'usure ($t_i$) de garnitures de frein (23/1, 23/2, 23/3, 23/4) sont déterminées au moyen de capteurs (24,25) et des signaux représentant ces valeurs d'usure ($t_i$) sont envoyés à un dispositif de calcul (15, 15/1), et dans lequel la répartition ($\Phi_V$) de la force de freinage en fonction de l'usure est déterminée dans le dispositif de calcul (15, 15/1), de telle sorte qu'un signal de réglage, qui représente une force de freinage plus faible, soit envoyé aux freins possédant une usure trop élevée par rapport aux autres freins, et les différentes valeurs d'usure ($t_{i,ancienne}$) de mesures antérieures sont mémorisées dans une mémoire,
**caractérisé en ce que**
la détermination des valeurs d'usure ($t_i$) et de la répartition ($\Phi_V$) de la force de freinage en fonction de l'usure s'effectue chaque fois au début d'un déplacement et que la répartition déterminée ($\Phi_V$) de la force de freinage en fonction de l'usure est conservée pendant tout le déplacement.

2. Procédé selon la revendication 1, caractérisé en ce que la répartition déterminée ($\Phi_V$) de la force de freinage en fonction de l'usure est en outre mémorisée dans la mémoire.

3. Procédé selon la revendication 2, caractérisé en ce qu'au moins une grandeur ($ddV$), qui représente la variation de l'usure, est calculée à partir des valeurs d'usure déterminées ($t_i$) et à partir des valeurs d'usure ($t_{i,ancienne}$, $d_{V,ancienne}$), mémorisées dans la mémoire, et qu'une modification de la répartition ($\Phi_V$) de la force de freinage en fonction de l'usure par rapport à la répartition ($\Phi_{V,ancienne}$), mémorisée dans la mémoire, de la force de freinage intervient uniquement lorsque la grandeur ($dd_V$), qui représente la variation de l'usure, dépasse une valeur limite ($G_V$).

4. Procédé selon la revendication 3, caractérisé en ce que, dans le cas d'une variation de la répartition ($\Phi_V$) de la force de freinage en fonction de l'usure par rapport à la répartition ($\Phi_{V,ancienne}$) mémorisée dans la mémoire, de la force de freinage, une valeur de correction ($d_p$) est déterminée en fonction de la grandeur ($d_V$), qui représente la variation de l'usure.

5. Procédé selon la revendication 3, caractérisé en ce qu'un signal représentant une usure prématurée des freins ou un fonctionnement défectueux des freins est produit dans le cas d'une variation de même sens, obtenue au moins deux fois, de la répartition ($\Phi_V$) de la force de freinage en fonction de l'usure, en-deçà d'une limite réduite de temps ou de kilométrage.

6. Procédé selon la revendication 1, caractérisé en ce que la mémoire est agencée sous la forme d'une mémoire de longue durée, indépendante du fonctionnement du véhicule.

7. Procédé selon la revendication 1, caractérisé en ce que la répartition ($\Phi_V$) de la force de freinage en fonction de l'usure est exécutée en commun pour les freins des roues d'un essieu (VA,HA).

8. Procédé selon la revendication 7, caractérisé en ce que la répartition ($\Phi_V$) de la force de freinage en fonction de l'usure entre les essieux (VA,HA) est exécutée de telle sorte que le rapport des valeurs d'usure ($t_i$) entre les essieux respectifs puisse être converti, par accroissement et/ou réduction, en un rapport de nombres naturels, dont l'un au moins est "un".

9. Procédé selon la revendication 1, caractérisé en ce que les valeurs d'usure déterminées ($t_i$, $t_{i,ancienne}$) des différentes roues sont mémorisées dans un registre à décalage et qu'une usure moyenne ($t_{i,m}$) est calculée à partir des valeurs d'usure.

10. Procédé selon la revendication 1, caractérisé en ce que la répartition ($\Phi_V$) de la force de freinage en fonction de l'usure est superposée à une répartition ($\Phi_{adh}$) optimisée du point de vue de l'adhérence, de la force de freinage.

11. Procédé selon la revendication 10, caractérisé en ce que la répartition ($\Phi_V$) de la force de freinage en fonction de l'usure est supprimée lorsque la valeur de décélération de consigne ($z_{consigne}$), qui peut être dérivée du générateur de la force de freinage, pouvant être actionné à volonté, dépasse une valeur limite ($G_Z$).

12. Procédé selon la revendication 11, caractérisé en ce que la valeur limite ($G'_Z$) pour la valeur de décélération de consigne correspond à un freinage complet ou à un freinage d'urgence.

13. Procédé selon la revendication 12, caractérisé en ce que la valeur limite est égale à 0,3 fois l'accélération de la pesanteur (g).

14. Procédé selon la revendication 10, caractérisé en ce que pour la répartition de la force de freinage en fonction de l'usure, on prédétermine une valeur limite ($d_{sV}$) pour la différence relative des vitesses de rotation des roues, la valeur limite ($d_{sV}$) étant comprise entre 1 % et 5 % de la vitesse de rotation moyenne de roue, tandis que, lors du dépassement de la valeur limite ($d_{sV}$), une correction dynamique de la répartition de la force de freinage est exécutée.

15. Procédé selon la revendication 1 ou 10, caractérisé en ce qu'un système de blocage ABS est superposé à la répartition ($\Phi_V$) de la force de freinage en fonction de l'usure.

# Fig. 1

Fig. 2